# EUROPÄISCHE PATENTANMELDUNG

(11) **EP 0 685 513 A1**
(43) Veröffentlichungstag der Anmeldung: **06.12.1995**
(21) Anmeldenummer: 95107790.8
(22) Anmeldetag: 22.05.1995
(51) Int. Cl.: C08K 3/00

(54) **Verwendung von anorganischen Peroxidverbindungen zur Farb- und/oder Thermostabilisierung von nitrilgruppenhaltigen Thermoplasten**

(30) Priorität: 03.06.1994 DE 4419571
(71) Anmelder: BAYER AG, 51368 Leverkusen (DE)
(72) Erfinder: Wunderlich, Hans, Dr., D-51373 Leverkusen (DE); Braese, Hans-Eberhard, Dipl. Ing., D-50765 Köln (DE); Mauerer, Otto, D-51377 Leverkusen (DE)

(57) **Zusammenfassung**

Spezielle anorganische Peroxiverbindungen oder deren Mischungen finden Verwendung zur Farb- und/oder Thermostabilisierung von nitrilgruppenhaltigen, thermoplastisch verarbeitbaren Polymeren oder deren Mischungen untereinander oder mit anderen, nicht nitrilgruppenhaltigen Thermoplasten.

## Beschreibung

Die Erfindung betrifft die Verwendung von anorganischen Peroxidverbindungen oder deren Mischungen zur Farb- und/oder Thermostabilisierung von nitrilgruppenhaltigen, thermoplastisch verarbeitbaren Polymeren oder deren Mischungen untereinander oder mit anderen, nicht nitrilgruppenhaltigen Thermoplasten.

Polymerisatmischungen aus Propfpolymerisaten von Acrylnitril, α-Methylstyrol auf Acrylatkautschuk, einem kautschukartigen Copolymerisat aus Acrylnitril und Alkylacrylat sowie einem unvernetzten Polymerisat von Sryrolen, α-Methylstyrolen, Acrylnitril, Methacrylnitril oder Estern der (Meth)acrylsäure sowie flexible Polymermischungen aus Propfpolymerisaten eines Gemisches aus Acrylnitril und Styrol auf hochvernetzten Alkylacrylkautschuk, einem Propfpolymerisat von Methylmethacrylat oder eines Gemisches aus Acrylnitril und Styrol auf hochvernetzten Alkylacrylkatschuk und einem teilvernetzten kautschukartigen Copolymerisat aus Acrylnitril, die sich zur Herstellung von flexiblen, alterungsbeständigen Folien mit lederartigem Aussehen eignen und durch Kalandrieren sowie Tiefziehen verarbeitet werden können, sind in den deutschen Offenlegungsschriften 38 11 899 und 37 43 489 beschrieben. Die aus den genannten Polymerisatmischungen hergestellten Folien weisen ein hohes Eigenschaftsniveau auf und besitzen eine gute Alterungsstabilität. Sie werden beispielsweise zur Innenverkleidung in Kraftfahrzeugen sowie - in modifizierter Form - als Möbelfolien eingesetzt. Trotz der im Vergleich zu bisher üblichen, PVC-haltigen Folienmassen, guter Farbstabilität auch unter Wärmeeinwirkung, können bei hohen Verarbeitungstemperaturen und/oder langen Verarbeitungszeiten, insbesondere in hellen Farbeinstellungen, Verfärbungen der Folien auftreten, die eine exakte Farbeinstellung bzw. eine Reproduktion heller Farben erschweren. Es bestand deshalb ein Bedarf nach Polymerisatmischungen, welche eine verbesserte Farbstabilität aufweisen und somit die genannten Nachteile vermeiden.

Es wurde gefunden, daß die für PVC- und/oder ABS-Formmassen üblichen und gebräuchlichen Stabilisierungsmittel wie Alkylzinnmercaptide, phenolische oder aminische Antioxidantien keine Verbesserung der Farbstabilität bei den zuvor genannten Polymerisatmischungen bewirken. Die in der EP 4 776 615 (US 5 196 466) beschriebenen Oxethangruppen-haltigen Phosphite, führen zwar zu einer besseren Alterungsstabilität, können aber die in der Praxis gestellten Anforderungen an die Farbhaltung nicht voll erfüllen. Das gleiche gilt auch für die in EP 478 976 (US 5 229 455) beschriebenen Oligoepoxidverbindungen. Die genannten Oligoepoxidverbindungen bewirken zwar eine einigermaßen befriedigende Thermostabilität und Farbhaltung, steigern aber die Viskosität der Polymerisatmischung so stark, daß beispielsweise eine Folienherstellung über Extrusion nicht möglich - über Kalanderverarbeitung stark erschwert ist.

Es besteht deshalb nach wie vor ein Bedarf an Additiven, die die Farb- und/oder Thermostabilität bei bestimmten Thermoplasten, die bei der Verarbeitung zur Verfärbung neigen, verbessern. Gegenstand der vorliegenden Erfindung ist daher die Verwendung von anorganischen Peroxidverbindungen oder deren Mischungen zu Farb- und/oder Thermostabilisierung von nitrilgruppenhaltigen, thermoplastisch verarbeitbaren Polymeren oder deren Mischungen untereinander oder mit anderen, nicht nitrilgruppenhaltigen Thermoplasten.

Als anorganische Peroxidverbindungen die sich für die genannte Verwendung eignen, seien insbesondere genannt:
Natriumperoxid, Bariumperoxid, Salze der Peroxosäuren, wie Kaliumperoxodisulfat, Kaliumperchlorat, Salze mit Kristallwasserstoffperoxid, wie Natriumperborat, Salze der Perchlorsäure, wie Kaliumperchlorat, Salze der Perschwefelsäure, wie Kaliumperoxodisulfat, Peroxoborate, wie Natriumperoxoborat, bevorzugt Salze der Perchlorsäure, Salze der Perschwefelsäure, Peroxoborate, ganz besonders bevorzugt Kaliumperchlorat und Natriumperoxoborat.

Die anorganischen Peroxidverbindungen können, wie bereits erwähnt, sowohl einzeln als auch im Gemisch untereinander den nitrilgruppenhaltigen, thermoplastisch verarbeitbaren Polymeren zugesetzt werden. Werden Mischungen der Peroxidverbindungen eingesetzt, so ist deren Mischungsverhältnis nicht kritisch. Das optimale Mischungsverhältnis kann leicht durch entsprechende Vorversuche ermittelt werden. Eine Phlegmatisierung der Peroxidverbindung mit inerten Substanzen ist aber meist erforderlich.

Die anorganischen Peroxidverbindungen werden den Thermoplasten in Mengen von 0,01 bis 8,0 Gew.-%, bevorzugt 0,1 bis 3,0 Gew.-%, ganz besonders bevorzugt 0,2 bis 2,0 Gew.-%, bezogen auf die Menge an eingesetzten Thermoplasten, eingesetzt.

Als nitrilgruppenhaltige, thermoplastisch verarbeitbare Polymere, die erfindungsgemäß mit den anorganischen Peroxidverbindungen Farb- und/oder thermostabilisiert werden können, kommen in Frage:
- Acrylnitril-Butadien-Styrolpfropfpolymer: (ABS),
- Nitril-Butadienkautschuke: (NBR),
- Acrylnitril-Styrolcopolymer: (SAN),
- Acrylnitril-Styrol-Acrylestercopolymer: (ASA),
- Methylmethacrylat-Acrylnitrilcopolymer: (AMMA),
- Polyacrylnitril: (PAN),
bevorzugt (ABS), (ASA) und (NBR), ganz besonders bevorzugt (ABS) und (ASA).

Die genannten Thermoplasten können sowohl einzeln als auch im Gemisch untereinander oder im Gemisch mit anderen, nicht nitrilgruppenhaltigen Thermoplasten eingesetzt werden. Als nicht nitrilgruppenhaltige Thermoplaste kommen z.B. in Frage:
Methylmethacrylate, Polycarbonate, Polyester, Ethylenvinylacetate, Polystyrole, bevorzugt Ethylenvinylacetate und Polycarbonate.

Die nicht nitrilgruppenhaltigen Thermoplasten können den nitrilgruppenhaltigen Thermoplasten in Mengen von 5 bis 95 Gew.-%, bevorzugt 5 bis 40 Gew.-%, bezogen auf die Gesamtmenge an Polymer, zugesetzt werden.

Die zuvor erwähnten nitrilgruppenhaltigen, thermoplastisch verarbeitbaren Polymeren sowie die nicht nitrilgruppenhaltigen Thermoplasten sind bekannt und beispielsweise näher beschrieben in Kunststoff-Handbuch, R. Vieweg, Carl Hanser Verlag München, 1969, Band 5; Kunststoff-Handbuch R. Vieweg, Carl Hanser Verlag München, 1973, Band 8; Kunststoff-Handbuch R. Vieweg, Carl Hanser Verlag München, 1975, Band 9; Kunststoff-Handbuch R. Vieweg, Carl Hanser Verlag München, 1969, Band 4; Kunststoff-Handbuch R. Vieweg, Carl Hanser Verlag München, 1966, Band 6.

Die erfindungsgemäßen anorganischen Peroxidverbindungen können nach ausreichender Phlegmatisierung den zu stabilisierenden nitrilgruppenhaltigen, thermoplastisch verarbeitbaren Polymeren in den dafür üblichen Vorrichtungen, wie Schnellmischern, Knetern oder Extrudern zugemischt werden. Die erfindungsgemäß Farb- und/oder thermostabilisierten nitrilgruppenhaltigen, thermoplastisch verarbeitbaren Polymeren können verwendet werden zur Herstellung von Formkörpern aller Art, sowie zur Herstellung von Folien. Besonders bevorzugt ist die Verwendung zur Herstellung von Folien.

### Beispiele

### Beispiel 1

Eine Polymerisatmischung wird auf einer Walze aus 90 Teilen eines Acrylnitril-Styrol-Butylacrylatcopolymeren, 10 Teilen eines Ethylen-Vinylacetatcopolymeren, 0,3 Teilen Gleitmittel und den in der Tabelle 1 angegebenen stabilisierenden Verbindungen hergestellt. Die Thermostabilität wird durch Walzen bei 200°C sowie durch Wärmeverlagerung bei 200°C im Mathisofen geprüft und optisch anhand von evtl. auftretenden Farbveränderungen beurteilt.

**Tabelle 1**

| Zusätze zu den Polymerisatmischungen (in Gew.-Teilen), bezogen auf 100 Gew.-Teile der Ausgangsformmasse | | | |
|---|---|---|---|
| **Stabilisierende Verbindung** | **Gew.-Teile (%)** | **Wärmebehandlung (200°C)** | **Befund** |
| Bariumperoxid (phlegmatisiert) | 0,20 | Walze | Keine Verfärbung bis 30 min |
| Kaliumperchlorat (phlegmatisiert) | 0,20 | Walze | Keine Verfärbung bis 30 min |
| Kaliumperchlorat (phlegmatisiert) | 1,00 | Walze | Keine Verfärbung bis 30 min |
| Natriumperoxoborat | 2,00 | Walze | Keine Verfärbung bis 30 min |
| Kaliumperchlorat (phlegmatisiert) | 0,10 | Ofen | Keine Verfärbung bis 20 min |
| Kaliumperchlorat (phlegmatisiert) | 1,00 | Ofen | Keine Verfärbung bis 20 min |
| Natriumperoxoborat | 2,00 | Ofen | Keine Verfärbung bis 20 min |
| Tris (3-ethyl-3-methyloloxethan) phosphit | 2,00 | Ofen | Keine Verfärbung bis 10 min |
| Epoxidharz auf Basis von Bisphenol A und Epichlorhydrin | 2,00 | Ofen | Keine Verfärbung bis 10 min |

### Vergleichsbeispiele

Analog den Beispielen werden Vergleichspolymerisatmischungen ohne die Peroxid-haltige Komponente hergestellt.

Während sich die Vergleichsformmassen bei 200°C bereits nach 10 Minuten leicht und nach 20 Minuten bereits stark braun färbten, trat bei den Peroxid-haltigen Beispielen nach 20 bzw. 30 Minuten keine wesentliche Veränderung des Rohtones auf.

### Beispiel 2

Eine Polymerisatmischung wird aus 90 Teilen eines Acrylnitril-Butadien-Styrolpropfpolymeren, 10 Teilen Ethylen-Vinylacetatcopolymer, 0,2 Teilen Makrolex Blau RR (der Fa. Bayer AG), 0,3 Teilen Gleitmittel und den in der Tabelle 2 angegebenen stabilisierenden Verbindungen auf einer Walze bereitet. Die Thermostabilität wird durch Wärmelagerung bei 200°C im Mathisofen geprüft und optisch anhand von evtl. auftretenden Farbveränderungen beurteilt.

**Tabelle 2**

| Zusätze zu den Polymerisatmischungen (in Gew.-Teilen) bezogen auf 100 Gew.-Teile der Ausgangsformmasse | | | |
|---|---|---|---|
| **Stabilisierende Verbindung** | **Gew.-Teile (%)** | **Wärmebehandlung (200°C)** | **Befund** |
| Kaliumperchlorat (phlegmatisiert) | 0,20 | Ofen | Keine Verfärbung bis 20 min |
| Kaliumperchlorat (phlegmatisiert) | 1,00 | Ofen | Keine Verfärbung bis 20 min |
| Natriumperoxoborat | 2,00 | Ofen | Keine Verfärbung bis 20 min |
| Tris (3-ethyl-3-methyloloxethan) phosphit | 2,00 | Ofen | Keine Verfärbung bis 10 min |
| Epoxidharz auf Basis von Bisphenol A und Epichlorhydrin | 2,00 | Ofen | Keine Verfärbung bis 10 min |
| Triglycidylisocyanurat | 1,00 | Ofen | Keine Verfärbung bis 20 min |

### Vergleichsbeispiele

Analog den Beispielen werden Vergleichspolymerisatmischungen ohne die Peroxid-haltige Komponente hergestellt.

Während sich die Vergleichsformmassen bereits nach 10 Minuten leicht und nach 20 Minuten bereits stark dunkelblau färbten, trat bei den Peroxid-haltigen Beispielen nach 20 Minuten keine Veränderung des Blautones auf.

### Beispiel 3

Eine Polymerisatmischung wird aus 70 Teilen eines Acrylnitril-Butadien-Styrolpropfpolymeren, 30 Teilen eines Polycarbonates, 0,3 Teilen Gleitmittel und den in der Tabelle 3 angegebenen stabilisierenden Verbindungen auf einer Walze bereitet. Die Thermostabilität wird durch Wärmelagerung bei 200°C im Mathisofen geprüft und optisch anhand von evtl. auftretenden Farbveränderungen beurteilt.

**Tabelle 3**

| Zusätze zu den Polymerisatmischungen (in Gew.-Teilen) bezogen auf 100 Gew.-Teile der Ausgangsformmasse | | | |
|---|---|---|---|
| **Stabilisierende Verbindung** | **Gew.-Teile (%)** | **Wärmebehandlung (200°C)** | **Befund** |
| Kaliumperchlorat (phlegmatisiert) | 0,20 | Ofen | Keine Verfärbung bis 10 min |
| Kaliumperchlorat (phlegmatisiert) | 1,00 | Ofen | Keine Verfärbung bis 20 min |
| Natriumperoxoborat | 2,00 | Ofen | Keine Verfärbung bis 20 min |

### Vergleichsbeispiele

Analog den Beispielen werden Vergleichspolymerisatmischungen ohne die Peroxid-haltige Komponente hergestellt.

Während sich die Vergleichsformmassen bereits nach 10 Minuten leicht und nach 20 Minuten bereits stark gelblich-braun färbten, trat bei den Beispielen nach 10 bzw. 20 Minuten keine Veränderung des Rohtones auf.

### Beispiel 4

Eine Polymerisatmischung wird auf einer Walze aus 70 Teilen eines Acrylnitril-Butadien-Styrolpropfpolymeren, 20 Teilen eines Nitril-Butadienkautschuks, 10 Teilen eines Styrol-Acrylnitrilcopolymerisates, 0,3 Teilen Gleitmittel und den in der Tabelle 4 angegebenen stabilisierenden Verbindungen auf einer Walze bereitet. Die Thermostabilität wird durch Wärmelagerung bei 200°C im Mathisofen geprüft und optisch anhand von evtl. auftretenden Farbveränderungen beurteilt.

**Tabelle 4**

| Zusätze zu den Polymerisatmischungen (in Gew.-Teilen) bezogen auf 100 Gew.-Teile der Ausgangsformmasse | | | |
|---|---|---|---|
| **Stabilisierende Verbindung** | **Gew.-Teile (%)** | **Wärmebehandlung (200°C)** | **Befund** |
| Kaliumperchlorat (phlegmatisiert) | 0,10 | Ofen | Keine Verfärbung bis 10 min |
| Natriumperoxoborat | 2,00 | Ofen | Keine Verfärbung bis 10 min |

### Vergleichsbeispiele

Analog den Beispielen werden Vergleichspolymerisatmischungen ohne die Peroxid-haltige Komponente hergestellt.

Während sich die Vergleichsformmassen bei 200°C bereits nach 10 Minuten leicht und nach 20 Minuten bereits stark braun färbten, war bei den erfindungsgemäßen Beispielen nach 10 Minuten keine Veränderung des Rohtones zu beobachten, nach 20 Minuten trat eine leichte Braunfärbung ein.

## Patentansprüche

1. Verwendung von anorganischen Peroxidverbindungen oder deren Mischungen zur Farb- und/oder Thermostabilisierung von nitrilgruppenhaltigen, thermoplastisch verarbeitbaren Polymeren oder deren Mischungen untereinander oder mit anderen, nicht nitrilgruppenhaltigen Thermoplasten.

2. Verwendung von anorganischen Peroxidverbindungen gemäß Anspruch 1, dadurch gekennzeichnet, daß man anorganische Peroxidverbindungen in Mengen von 0,01 bis 8,0 Gew.-%, bezogen auf die Menge an eingesetzten Polymeren, einsetzt.
